Europäisches Patentamt

European Patent Office

Office européen des brevets

(11) Publication number: **0 204 993**
**A2**

# (12) EUROPEAN PATENT APPLICATION

(21) Application number: **86106718.9**

(51) Int. Cl.⁴: **G06F 15/40**

(22) Date of filing: **16.05.86**

| | |
|---|---|
| The title of the invention has been amended (Guidelines for Examination in the EPO, A-III, 7.3). | (71) Applicant: **International Business Machines Corporation**<br>**Old Orchard Road**<br>**Armonk, N.Y. 10504(US)** |
| (30) Priority: **11.06.85 US 743558** | (72) Inventor: **Bartocci, Francis Dennis**<br>**2434 Northern Hill Ct.**<br>**Rochester Minnesota 55904(US)**<br>Inventor: **Won, Joha Hyun**<br>**24, Sedgewood Road**<br>**Chapel Hill North Carolina 27514(US)**<br>Inventor: **Singh, Harinder S.**<br>**10722 Kirkaldy Lane**<br>**Boca Raton Florida 33434(US)**<br>Inventor: **Gopal, Inder**<br>**60, Hauen Ave. Nr 19E**<br>**New York, N.Y. 10032(US)** |
| (43) Date of publication of application:<br>**17.12.86 Bulletin 86/51** | |
| (84) Designated Contracting States:<br>**DE FR GB IT** | |
| | (74) Representative: **Bonin, Jean-Jacques**<br>**Compagnie IBM France Département de Propriété Intellectuelle**<br>**F-06610 La Gaude(FR)** |

(54) **Hybrid directory data distribution system.**

(57) A hybrid directory data distribution system includes a plurality of different types of interconnectable directory subsystems, the subsystem types including replicated, localized, centralized and extended centralized.

TWO-LEVEL HYBRID DIRECTORY SYSTEM

FIG. 5

## HYBRID DIRECTORY DATA DISTRIBUTION SCHEMES FOR NETWORK TOPOLOGIES

CROSS REFERENCE TO RELATED APPLICATIONS

The following copending applications, all filed by the same applicant as the present application, are related to the subject matter of this application, in that they each relate to different aspects of a directory database system.

(A1) "GENERALIZED DATA DIRECTORY MODEL", Application N°

(A2) "PROPAGATION APPARATUS FOR NETWORK QUERIES THROUGH SUPERIOR-SUBORDINATE AND PEER-PEER DATA DISTRIBUTION RELATIONSHIPS", Application N°

(A3) "GENERALIZED ALGORITHMIC CONTROL BLOCKS FOR SEQUENTIAL AND PARALLEL QUERIES IN DISTRIBUTED DIRECTORY NETWORKS", Application N°

(A4) "DYNAMIC UPDATE OF DATABASE DIRECTORIES USING DIRECTED OR UNDIRECTED MECHANISMS", Application N°

All of the above referenced applications (filed concurrently with the present application) are incorporated herein by reference.

BACKGROUND OF THE INVENTION

Field of the Invention

This invention relates to directory data distribution systems for distributing such directory data throughout a database network. In the present application the term database network. In the present application the term directory means a table of names and corresponding items of data. Data in a directory is locational or directive in nature, e.g.

(1) a listing of names, addresses and other data about a specific group of persons or organizations,

(2) an index that is used by a control program to locate one or more blocks of data stored in separate areas of a data set in direct access storage, or

(3) an index to locate blocks of program information. The user of a directory knows the definition of the object references by a name, but needs the specific data value(s), e.g; phone number, in order to perform a specific activity.

PRIOR ART

Distributed database management systems offer users the ability to distribute data and workload among multiple processing sites. ideally, a distributed database management system should support growth while preserving local administrative autonomy and control of access to locally stored data. At the same time, the distributed database should provide its users with a single system image such that, although the data is distributed among several sites, the data distribution is transparent to the users who express their database accesses as though the data is at one place.

It is important to preserve the local autonomy of database administrators and users at each site of the distributed database while, at the same time, supporting information sharing among sites. It is to be expected that the equipment supporting the database at different sites will be controlled by different administrative entities. This expectation increases as the entry costs for computing facilities decline. Increased distribution of computing facilities leads to additional requirements for information sharing between sites to support the shared objectives and interests of the users at different sites. Therefore, credible access control mechanisms must be provided to insure isolation, when desired, and to control access to the shared information. At the same time, users must be able to easily access and manipulate remote data as though it were local.

The distributed database management system architecture should preserve local control and function when accessing local database objects. The fact that a site participates in the distributed database should not reduce that site's ability to perform local actions on local data by requiring the participation of other sites. Also, data access availability should be a function only of the availability of the site(s) storing those data objects. The failure of one site should not impact sites which do not reference database objects stored (or controlled) by the failed site.

Finally, it must not be difficult for an existing database site to join the distributed database. It should be fairly easy for an existing database site to establish the ability to access data at another site. The addition of another site to the distributed database must not require a nationwide (or global) system generation.

U.S. Patent 4,468,728 discloses data structure and a search method for a data base management system in which the data structure is arranged in a plurality of search trees. The initial search tree and an initial subset of trees are maintained in a main fast access memory, while the remaining trees are kept in mass memory. An input sear parameter is partitioned into a plurality of subparameters, one for each search tree. The subparameters are used to search a tree in each level of the data structure until the location of a terminating file is determined.

An article entitled "Object Naming and Catalog Management For a Distributed Database Manager", Lindsay, 1981 IEEE, page 31, describes a system in which distribution of the catalog representation and maintenance leads to an architecture which supports transparent user access to data which may be distributed, replicated, and partitioned among the site of the distributed system. The architecture preserves individual site autonomy while facilitating graceful system growth.

## SUMMARY OF THE INVENTION

There are many ways to distribute directory data through a network. Examples include centralized schemes where a single Directory Service Unit (DSU) maintains the entire directory. Alternatively, there are local schemes where each DSU maintains a subset of the directory information, and various hybrid schemes which combine local and centralized schemes. The desired attributes of the distribution, the importance of which depends upon the environment of each directory application, are: low query/update message flows, low storage requirements, fast response to queries, and low susceptibility to failures.

The hybrid distribution scheme of the present invention permits the distribution of the directory data among interconnected DSUs. With this - scheme, multiple directory applications with different distribution schemes can co-exist in a network and still use a common protocol. This scheme allows heterogeneous products to be part of a network and still access directory services. This is the only data distribution scheme that allows multiple directory applications to co-exist and use a common protocol without duplication of code.

## BRIEF DESCRIPTION OF THE DRAWINGS

Fig. 1 is a block diagram of the overall structure of the system of the present invention;

Fig. 2 is a block diagram of the structure of the Directory Function Service of the present invention;

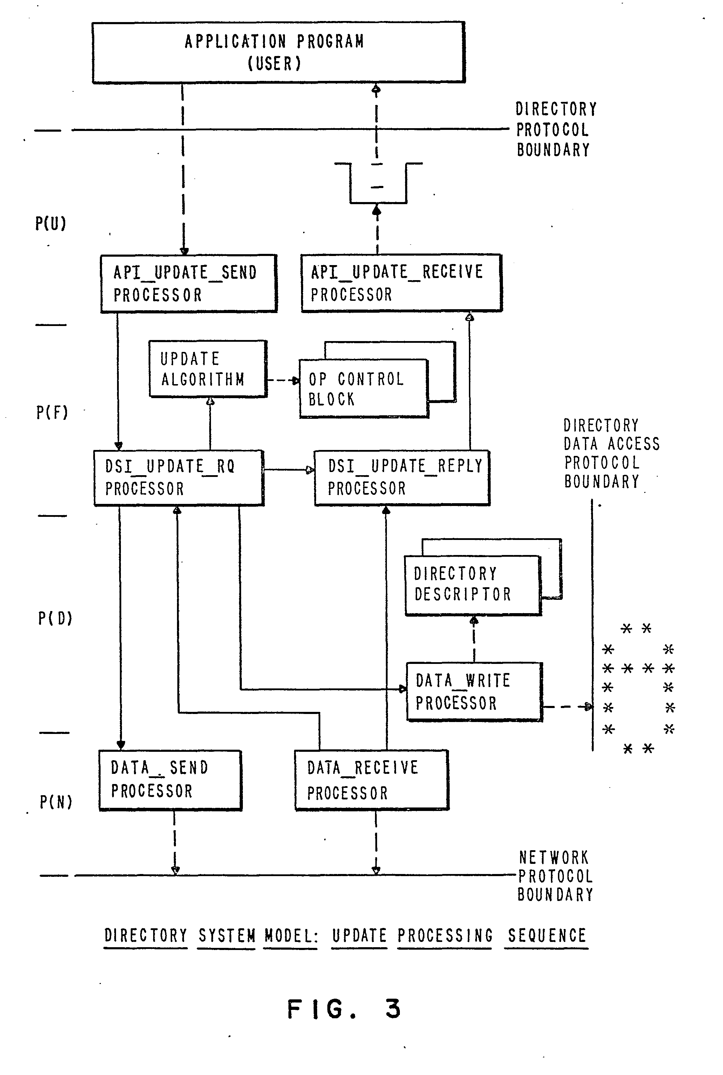

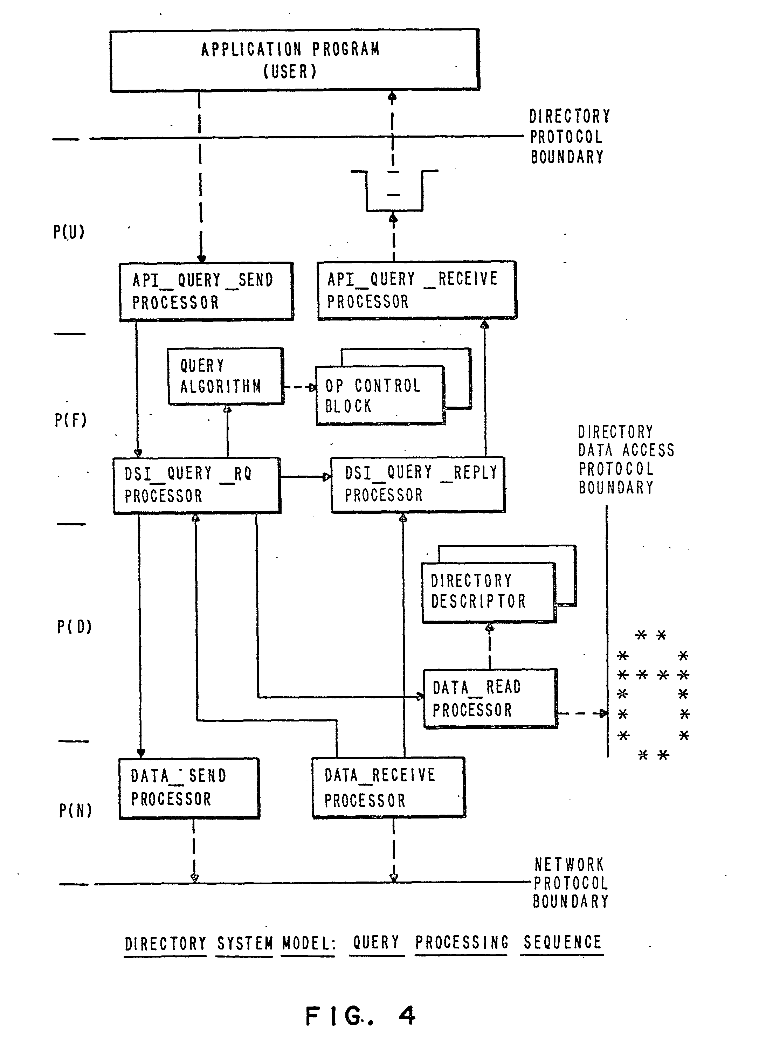

Figs. 3 and 4 illustrate the processing sequences for update and query propagation, respectively, in accordance with the present invention; .

Figure 5 is a block diagram showing a typical hybrid distribution system in accordance with the present invention.

## DESCRIPTION OF THE PREFERRED EMBODIMENT

The following definitions of terms used herein are given.

Application interface (API) -The protocol boundary between the user and the directory service.

Directory Service Interface (DSI) -The internal interface between directory service units- and outside services, such as communication, user services, or user data areas.

Directory Service System (DSS) -An instance of directory service in a given network of distributed directory services.

Directory Service Unit (DSU) -A unit of DSS that provides one or more directory service functions.

## DIRECTORY DATABASE

Prior to a detailed description of the present invention, the following overview of the environment and elements of the invention are given.

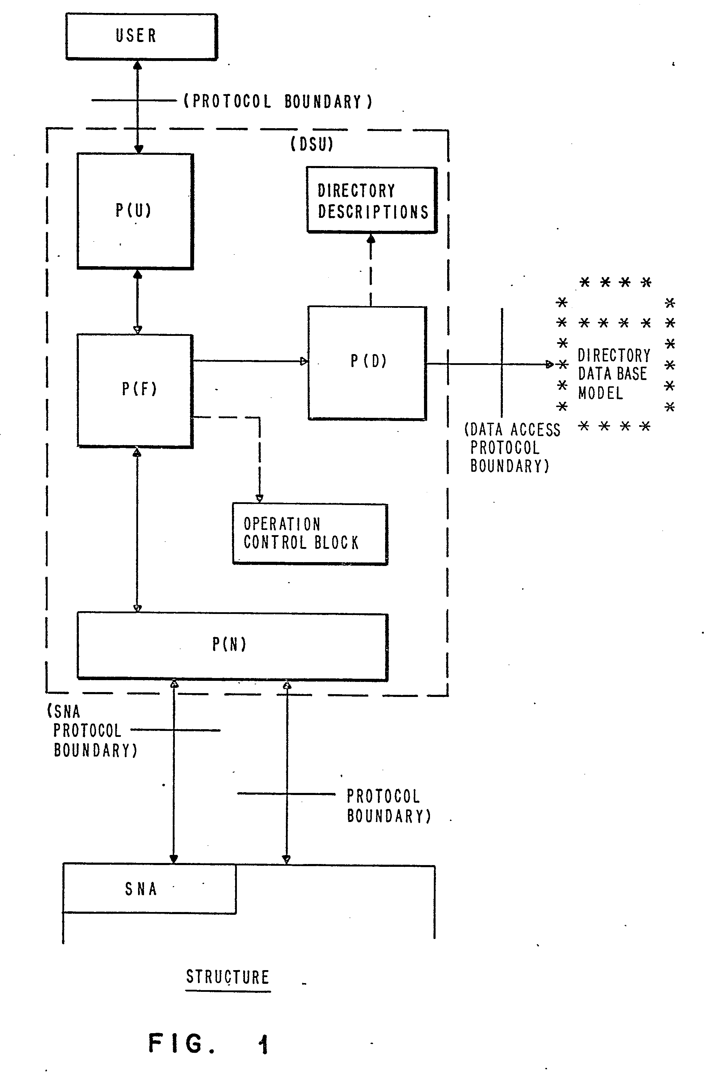

The basic structure of the directory database system of the present invention is shown in Fig. 1 Fig. 1 illustrates the different interfaces or protocol boundaries between the DSU shown at the top of the figure, a data access protocol boundary at the right side of the figure representing the interface between the DSU and the database, and a communications protocol boundary illustrated at the bottom of the figure.

The present structure and method is based on a distribution scheme where an instance of directory service may include one or more DSUs. Each DSU may perform one or more directory functions depending upon the product implementation.

The directory service system shown in Figure 1 is an installation of a directory functions in a network of interconnected systems. DSS provides the architectural directory services for the user at the API protocol boundary. The participating systems (products) in a DSS operate coherently under the architected rules as data distribution schemes, naming schemes, search/update algorithms, error recovery, synchronization and the like.

A DSS is comprised of a collection of directory service units distributed throughout the interconnected system network. A DSU represents the directory service component of a system (product) for different directory applications, it is the intent that a single DSU can support many applications programs to eliminate duplication.

DSU Functions

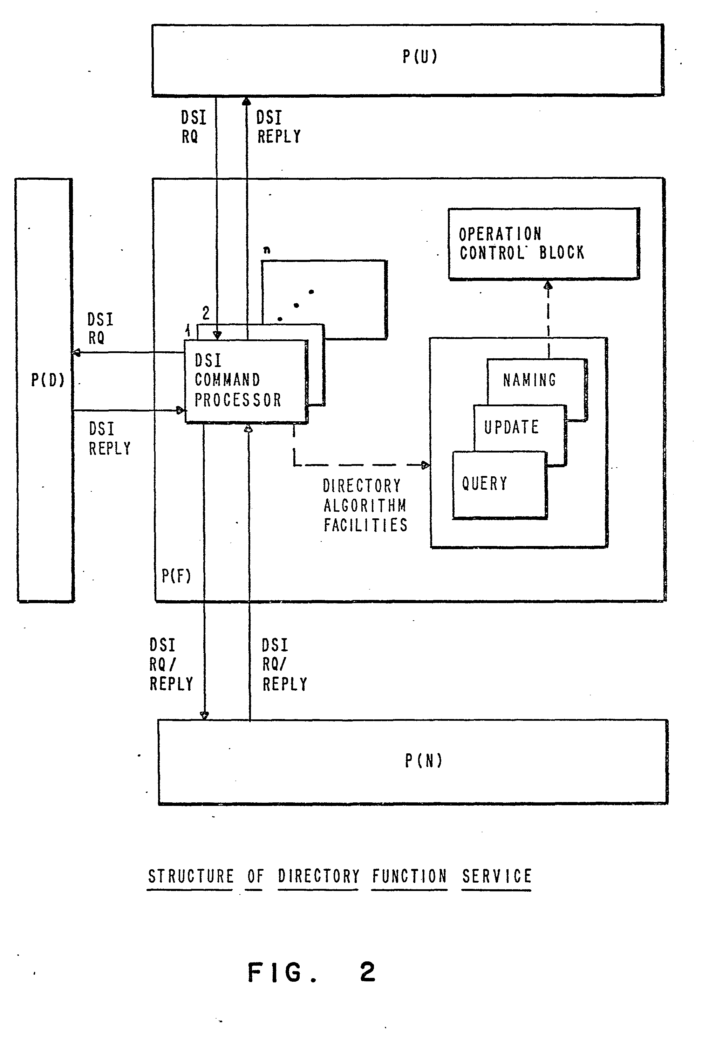

A DSU is composed of a set of functional components called directory service processes - (DSP) to provide the subsetting bases for implementation by products. There are the following four types of DSPs, as shown in Fig. 2, each of which performs distinct functions.

1. User Service Process, denoted as P(U) or U, manages the interface (protocol boundary) with users.

2. Directory Function Process, denoted as P-(F) or F, processes the directory functions to service the directory request using the algorithms - (query/update/naming).

3. Directory Data Service, denoted as P(D) or D, manages the access and maintenance of the directory data.

4. Network Service Process, denoted as P(N) or N, manages the transport network facilities to communicate with other DSUs.

The structure and function of these DSPs are described in detail in above cited copending application (A2).

In order to obtain full directory service, it is not necessary that every DSU in the system implement all DSPs. For example, a work-station may implement only some of the functions and obtain full directory service through interaction with a larger system product. Thus, a DSU may contain all four DSPs or some of the DSPs as necessary to meet the functional needs of each product.

A directory database is a database that stores mappings from name to information related to the name. The directory database is the set of directories which contain information of a similar type. There is more than one member in the set if the directory database is distributed across participating DSUs. The directory database members which comprise it are named by way of a directory type ID (Directory Identifier). For example, a directory database with directory type ID TELEPHONE may contain name-to-telephone number mappings. A single DSU may maintain directories of different directory type IDs. However, for any given type ID, a DSU may contain at most one directory.

DIRECTORY DISTRIBUTION

Some examples of directory distribution - schemes are as follows:

Centralized Directory System Single Master

In this centralized directory system, there is a single master directory for each directory type ID located whenever a change takes place and directory updating in such a system is relatively easy. However, there are communication costs (traffic) incurred for each query, since all queries compete for the same resources.

Extended Central

In this centralized directory system, once a DSU finds directory data, it can append this data onto its local directory. Thus, subsequent queries for the same data can be satisfied directly from that local directory, thereby reducing the communication cost as well as time for querying the master directory.

Multiple Masters

In this directory system, there is more than one master directory per directory type ID in the system. The degenerated case will be the replicated directory system.

Local Directory System Local

In the local system there is no master directory in the system and each DSU maintain its local directory data. When a DSU cannot satisfy the directory request from its local directory, it queries all other directories in the system until the requested data is located.

Extended Local

In this local directory system, once a DSU finds the directory data, it can append this data onto its local directory. Thus, subsequent queries for the same data can be satisfied directly from its local directory, thereby reducing communication cost.

Replicated Directory System

In a replicated directory system, each DSU in the system has a master directory. The advantage of this system is its fast query response time. The disadvantage of this system is the cost of storing master directory information at each DSU, as well as the communication cost for updating all these directories.

HYBRID DIRECTORY SCHEMES

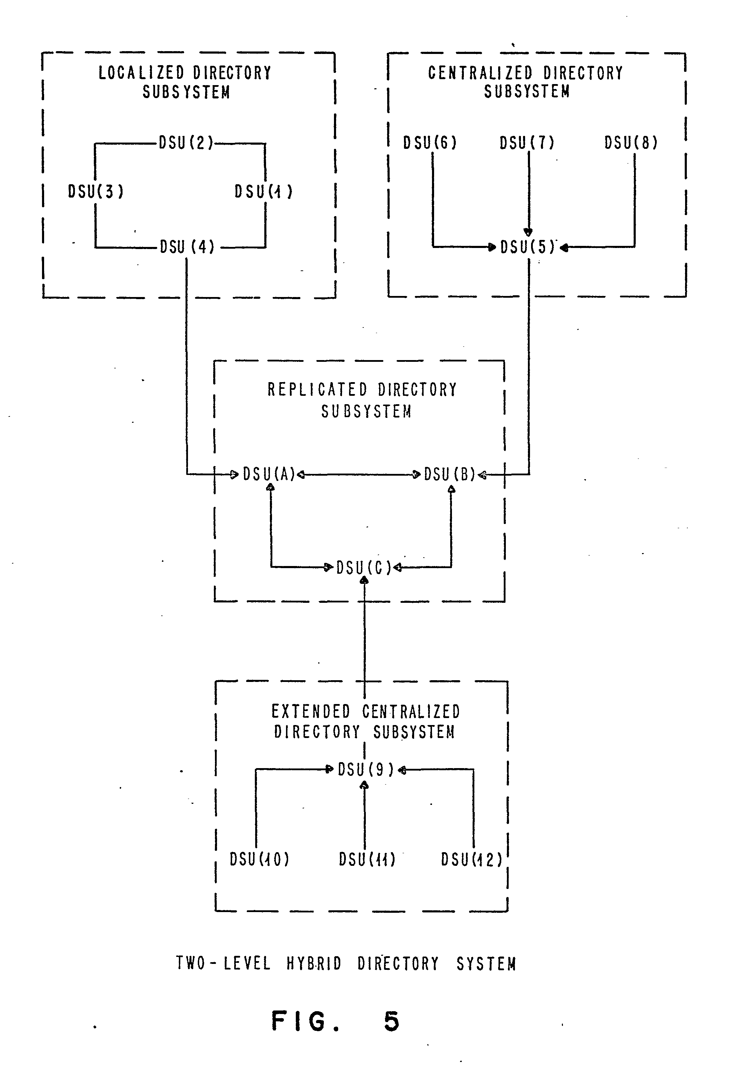

For networks up to a few tens of DSUs, a single level (primitive) distribution scheme described above (that is, centralized, localized, and distributed), is usually sufficient. Beyond this number of nodes, hybrid systems combining various primitive distribution schemes in a hierarchial manner, as illustrated in Fig. 5 are attractive. As shown in the drawing, a hybrid directory system in accordance with the present invention includes a replicated directory subsystem containing DSUs A, B and C. This replicated system communicates with an extended centralized directory subsystem containing DSUs 8, 10, 11 and 12. The replicated directory subsystem also communicates with a localized directory subsystem containing DSUs 1, 2, 3 and 4, and with a centralized directory subsystem containing DSUs 5, 6, 7 and 8. The hybrid multiple level design can offer both types of performance improvements over a single level design.

The present hybrid directory system is logically divided in subsystems, or regions, made up of any number of distributed directory services. Each subsystem uses different (primitive) directory distribution schemes to fit into its regional environment. The hierarchial relationships between subsystems are independent of the actual topology of the physical network.

The present invention defines a directory distribution scheme that allows co-existent operation of many heterogenous products and/or applications in interconnected networks.

**Claims**

1. A hybrid directory data distribution system comprising a plurality of directory subsystems, said subsystems being capable of being interconnected, said plurality of directory subsystems including different types of directory subsystems.

2. A hybrid directory data distribution system in accordance with Claim 1 in which said plurality of directory subsystems includes at least one centralized directory subsystem and at least one localized directory subsystem, said centralized directory subsystem containing a single master directory for each directory type, and said localized directory subsystem maintaining its local directory data.

3. A hybrid directory data distribution system in accordance with Claim 1 in which said plurality of directory subsystems includes at least one centralized directory subsystem and at least one localized directory subsystem, said centralized directory subsystem being an extended centralized type in which once said subsystem locates directory data outside its own directory said subsystem can append said located data to its own directory.

4. A hybrid directory data distribution system in accordance with Claim 3 in which said plurality of directory subsystems includes a centralized directory subsystem as well as said extended centralized directory subsystem.

5. A hybrid directory data distribution system in accordance with Claim 1 in which said plurality of directory subsystems includes at least one replicated directory subsystem.

6. A hybrid directory data distribution system in accordance with Claim 4 including a replicated directory subsystem and to said extended centralized directory subsystem.

7. A hybrid directory data distribution system in accordance with Claim 5 including a localized directory subsystem.

8. A hybrid directory data distribution system in accordance with Claim 7 in which said localized directory subsystem is connectable to said replicated directory subsystem.

USER

(PROTOCOL BOUNDARY)

(DSU)

P(U)

DIRECTORY
DESCRIPTIONS

P(F)

P(D)

* * * *
DIRECTORY
DATA BASE
MODEL
* * * *

(DATA ACCESS
PROTOCOL
BOUNDARY)

OPERATION
CONTROL BLOCK

P(N)

(SNA
PROTOCOL
BOUNDARY)

PROTOCOL
BOUNDARY)

SNA

STRUCTURE

FIG.    1

STRUCTURE OF DIRECTORY FUNCTION SERVICE

FIG. 2

APPLICATION PROGRAM
(USER)

DIRECTORY
PROTOCOL
BOUNDARY

P(U)

API_UPDATE_SEND
PROCESSOR

API_UPDATE_RECEIVE
PROCESSOR

UPDATE
ALGORITHM

OP CONTROL
BLOCK

P(F)

DIRECTORY
DATA ACCESS
PROTOCOL
BOUNDARY

DSI_UPDATE_RQ
PROCESSOR

DSI_UPDATE_REPLY
PROCESSOR

DIRECTORY
DESCRIPTOR

P(D)

DATA_WRITE
PROCESSOR

DATA_SEND
PROCESSOR

DATA_RECEIVE
PROCESSOR

P(N)

NETWORK
PROTOCOL
BOUNDARY

DIRECTORY SYSTEM MODEL: UPDATE PROCESSING SEQUENCE

FIG. 3

DIRECTORY SYSTEM MODEL: QUERY PROCESSING SEQUENCE

FIG. 4

TWO-LEVEL HYBRID DIRECTORY SYSTEM

FIG.  5